# EUROPÄISCHE PATENTANMELDUNG

(11) **EP 2 108 573 A2**
(43) Veröffentlichungstag der Anmeldung: **14.10.2009**
(21) Anmeldenummer: 09002716.0
(22) Anmeldetag: 26.02.2009
(51) Int. Cl.: B62D 65/18, B65G 63/00

(54) **Abnahmestation zur Entnahme eines Personenkraftwagens aus einem Ladungsträger**

(30) Priorität: 09.04.2008 DE 102008017889
(71) Anmelder: Dr.Ing. H.C. F. Porsche Aktiengesellschaft, 70435 Stuttgart (DE)
(72) Erfinder: Krüger, Detlef, 04229 Leipzig (DE); Schulze, Hans-Joachim, 29392 Wesendorf (DE); Maschmeier, Horst, 32289 Rödinghausen (DE)

(57) **Zusammenfassung**

Die Erfindung betrifft eine Abnahmestation zur Entnahme eines Moduls, insbesondere eines Personenwagens (3, 18), aus einem Ladungsträger (2), mit vertikal bewegbaren Stempeln (11, 12, 13, 14), die das Modul vertikal aus dem Ladungsträger (2) nach oben bis in eine maximal ausfahrbare Position herausheben. Um die Eignung der Abnahmestation für eine Vielzahl an Modulen zu erhöhen, wird vorgeschlagen, dass wenigstens einer der Stempel (11, 12, 13, 14) zusätzlich horizontal bewegbar ist. Ferner wird ein entsprechendes Verfahren für eine Abnahmestation vorgeschlagen.

## Beschreibung

Die Erfindung betrifft eine Abnahmestation zur Entnahme eines Personenwagens aus einem Ladungsträger sowie ein Verfahren hierzu.

Aus der DE 102 21 733 A1 ist eine Be- und Entladestation bekannt, die mehrere sogenannte Arbeitsstationen umfasst, in denen Fahrzeugkarossen als vorgefertigte Fahrzeuge auf Ladungsträgern von einem Bahnwaggon auf weiterfördernde Einrichtungen übergeben werden und im Kreislauf leere Ladungsträger wieder in den Bahnwaggon zurückgeladen werden.

Ferner ist aus der DE 102 00 982 B4 ein entsprechender Ladungsträger zur Beförderung von Personenkraftwagen z. B. in Form einer vormontierten Baueinheit ohne Räder bekannt, der sich für den Transport ebenjener vormontierten Baueinheiten zwischen entfernten Produktionsstandorten eignet.

In der gattungsgemäßen DE 102 21 733 A1 ist eine Abnahmestation beschrieben, bei der ein Modul, insbesondere ein Personenwagen, aus seinem Ladungsträger nach oben bis in eine maximal ausfahrbare Position herausgehoben wird.

Die Aufgabe der Erfindung liegt darin, eine Abnahmestation dahingehend weiterzuentwickeln, dass deren Eignung für die Abnahme von Modulen von Ladungsträger erhöht wird, wobei mit ein und derselben Abnahmestation eine Vielzahl an unterschiedlichen Modulen entnehmbar sein sollen. Ferner ist ein entsprechendes Verfahren zu entwickeln.

Die Aufgabe wird erfindungsgemäß durch die Merkmale des Patentanspruchs 1 und des Patentanspruchs 5 gelöst. Vorteilhafte Ausgestaltungen ergeben sich aus den Merkmalen der abhängigen Ansprüche.

Der Kern der Erfindung liegt darin, dass mittels Stempel das Modul aus dem Ladungsträger nach oben herausgedrückt wird. Die Stempel greifen dafür an entsprechende Aushebepunkte des Moduls an. Sofern sich die in den Ladungsträgern aufgenommenen Module in ihren Aushebepunkten voneinander unterscheiden, ist es durch die zusätzliche horizontale Bewegbarkeit der Stempel möglich, dass mit ein und derselben Abnahmestation Module verschiedenster Abmaße oder Klassifikationen aus einem Ladungsträger entnommen werden können. Sofern weitere Module verarbeitet werden sollen, sind deren Aushebepunkte entsprechend zu erfassen und die horizontale Bewegung der Stempel in X- bzw. in Y-Richtung zu bestimmen. Eine größte Varianz kann erzielt werden, wenn die horizontale Bewegung jedes Stempels einzeln ansteuerbar ist.

Die horizontale Bewegung des Stempels kann in Abhängigkeit von möglichen Aushebepunkten des Moduls festgelegt sein.

Eine größere Varianz kann erzielt werden, wenn die Bewegung der Stempel aus x- und y-Komponenten zusammengesetzt wird.

Zur Reduzierung der Einzelteile kann die vertikale Hubbewegung von wenigstens zwei Stempeln in einer Einheit durch ein gemeinsames Zahnriemenhubwerk erfolgen.

Für das Verfahren für die Abnahmestation kann ein Lesegerät vor der Abnahmestation oder eine Lichtschranke in der Abnahmestation das Modul identifizieren. Aus dieser Information lässt sich die horizontale Bewegung der Stempel initiieren.

Nach dem vertikalen Anheben des Moduls durch die Stempel fahren Teleskopgreifarme unter das Modul. Der Hub, den die Stempel zuvor bewirkt haben, ist auf die Höhe des Ladungsträgers sowie den Platz, den die Teleskopgreifarme benötigen abgestimmt.

Im Anschluss können die Teleskopgreifarme das Modul von der Abnahmestation seitlich wegtransportieren, so dass eine Übergabe des Moduls an einen sich anschließenden Karossenspeicher oder an eine sich anschließende Fertigungsstraße erfolgen kann.

Weitere vorteilhafte Ausgestaltungen der Erfindung werden im folgenden anhand der Zeichnung näher erläutert. Dabei zeigen:
- Fig. 1: schematischer Ablaufplan für eine Abnahmestation zur Entnahme eines Personenkraftwagens aus einem Ladungsträger,
- Fig. 2: eine Seitenansicht eines Ladungsträgers mit Personenwagen sowie mit darunter angeordneten Stempeln einer Abnahmestation,
- Fig. 3: eine Ansicht von unten auf eine Bodengruppe zweier Personenwagen,
- Fig. 4: eine perspektivische Ansicht einer vorderen Einheit einer Abnahmestation sowie
- Fig. 5: eine perspektivische Ansicht einer hinteren Einheit einer Abnahmestation.

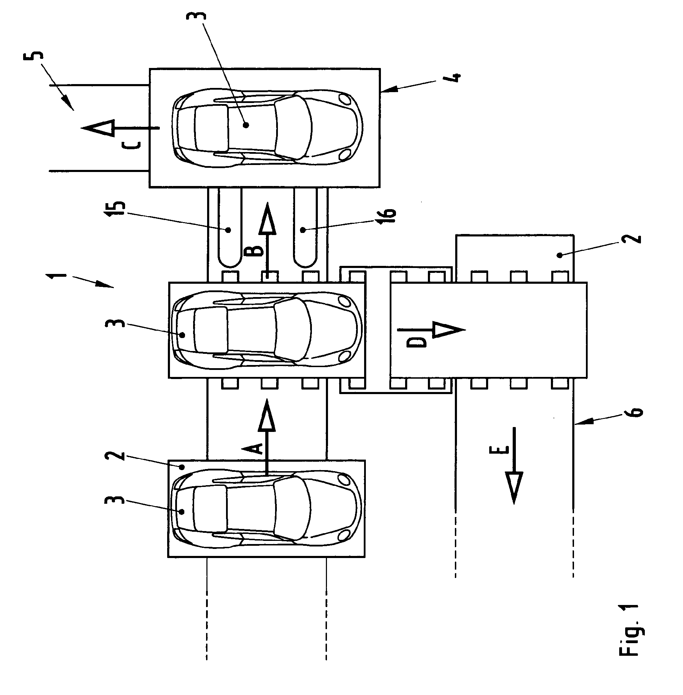

In Figur 1 ist ein Ausschnitt eines schematischen Ablaufplans dargestellt, der im wesentlichen der Beschreibung der deutschen Offenlegungsschrift DE 102 21 733 A1 entspricht. Die in Figur 1 dargestellte Abnahmestation 1 wird dabei gemäß Pfeilrichtung A von links mit Ladungsträgern 2 versorgt, die Personenwagen 3 geladen haben. Die Personenwagen 3 können dabei lackierte Karossen oder bereits mit Interieur ausgestattete Karosserien sein. Diese zwei Varianten stellen nur eine Möglichkeit dar. Denkbar ist, Karossen jeglicher Beschaffenheit mit den Ladungsträgern 2 zu transportieren und in der Abnahmestation 1 zu entnehmen.

In der Abnahmestation 1 wird dann der Personenwagen 3 vom Ladungsträger 2 getrennt. Der separierte Personenwagen 3 gelangt gemäß Pfeilrichtung B anschließend beispielsweise über nicht näher dargestellte Kettenförderer zu einem Heber 4 eines sich in Pfeilrichtung C erstreckenden Karossenlagers 5.

Der in der Abnahmestation 1 freigewordene Ladungsträger 2 wird über Rollen gemäß Pfeilrichtung D zu einem Förderband 6 transportiert und gemäß Pfeilrichtung E einer erneuten Verwendung zugeführt. Diese Verwendung besteht beispielsweise darin, die Ladungsträger aufeinander zu stapeln, in Wagons zu verladen und einem Produktionsstandort zuzuführen.

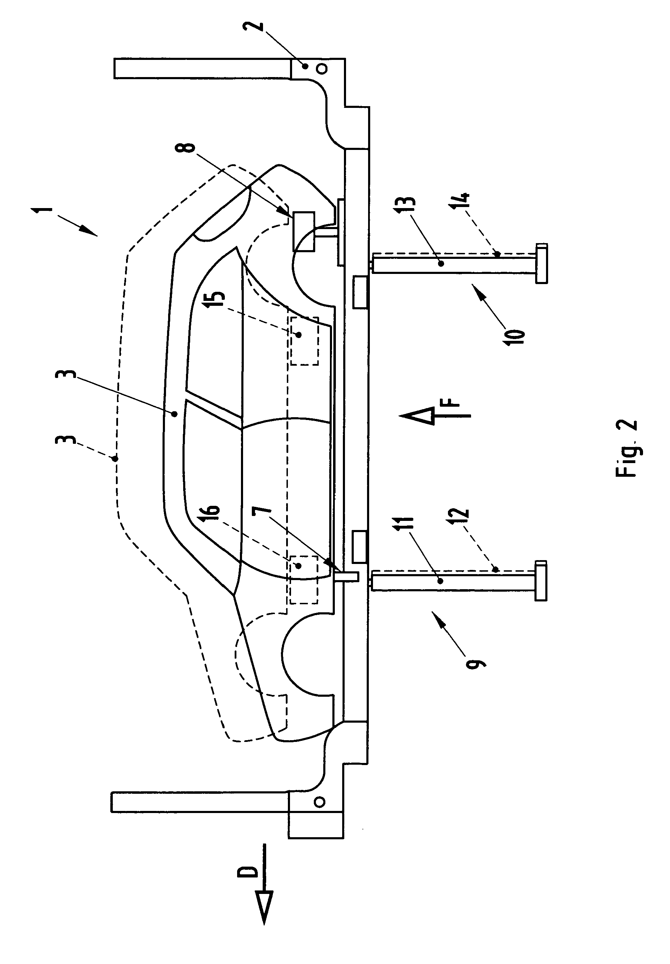

Eine detaillierte Darstellung der Abnahmestation 1 ist in Figur 2 dargestellt. Der Ladungsträger 2 umfasst eine vordere Stützvorrichtung 7 und eine hintere Festsetzungseinrichtung 8 zur sicheren Befestigung des Personenwagens 3 auf dem Ladungsträger 2 während des Transports. Die sichere Befestigung kann durch Formschluss erfolgen. Der Aufbau und die Wirkungsweise derartiger Stützvorrichtungen 7 und Festsetzvorrichtungen 8 sind in der deutschen Patentschrift DE 102 00 982 B4 näher beschrieben. Um den Personenwagen 3 von dem Ladungsträger 2 zu trennen und getrennt voneinander unterschiedlichen Prozessen zuzuführen, ist die Abnahmestation 1 mit einer vorderen Einheit 9 und einer hinteren Einheit 10 versehen.

Beide Einheiten 9 und 10 umfassen jeweils zwei Stempel 11, 12 sowie 13, 14. Diese Stempel 11, 12 sowie 13, 14 werden synchron gemäß Pfeilrichtung F vertikal nach oben angehoben bis sie mit ihrem freien Ende in entsprechende Aushebepunkte an der Bodengruppe des Personenwagens 3 eingreifen. Bei einer weiteren Aufwärtsbewegung der Stempel 11, 12 sowie 13, 14 wird der Personenwagen 3 mitgenommen und so aus den Stützvorrichtungen 7 und Festsetzeinrichtungen 8 des Ladungsträgers 2 gehoben.

Der Hub, den der Personenwagen 3 dabei zurücklegen muss, richtet sich u.a. nach dem verikalen Abmaß des Ladungsträgers 2. Gleichzeitig muss soviel Platz vorhanden sein, damit Teleskopgreifarme 15 und 16 vom Heber 4 unter den Personenwagen 3 ausgefahren werden können. Die angehobene Position des Personenwagens 3 sowie die Teleskopgreifarme 15 und 16 sind in Figur 2 mit einer gestrichelten Linie dargestellt. Die Teleskopgreifarme 15 und 16 erstrecken sich vertikal zur Zeichenebene und ziehen den Personenwagen 3 quasi auf den Heber 4.

Anschließend wird der freigewordene Ladungsträger 2 beispielsweise durch Kettenförderer oder Rollen in Pfeilrichtung D zum Förderband 6 wegtransportiert.

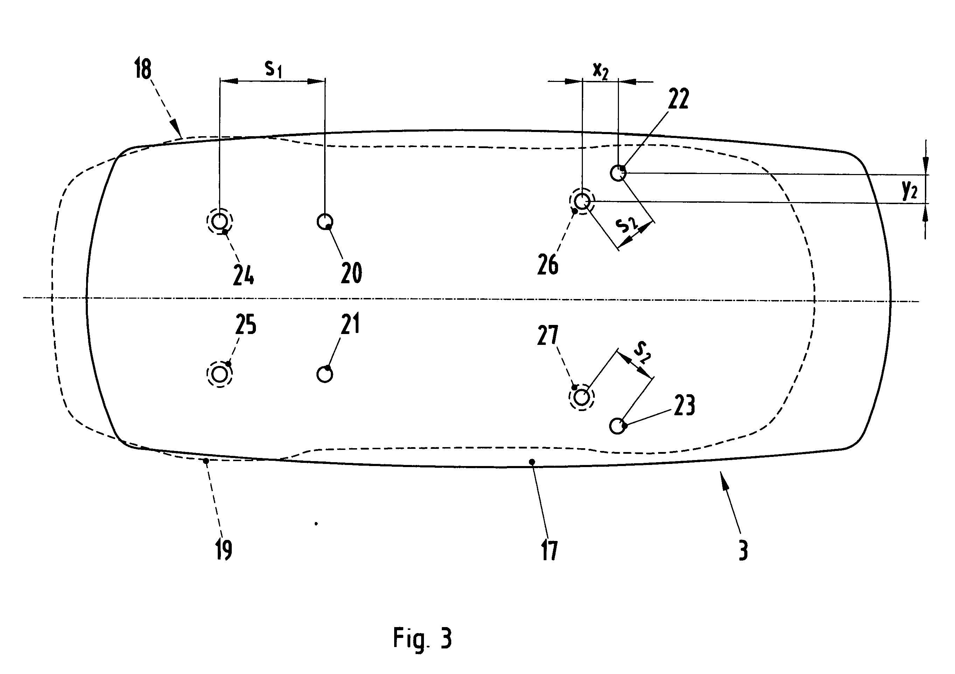

Auf die Aushebepunkte an der Bodengruppe des Personenwagens wird anhand von Figur 3 näher eingegangen. In Figur 3 ist ein Personenwagen 3 einer ersten Modellreihe mit seiner Bodengruppe 17 als durchgezogene Linie dargestellt. Ein weiterer Personenwagen 18 einer zweiten Modellreihe ist mit seiner Bodengruppe 19 als gestrichelte Linie dargestellt.

Jeder der Personenwagen 3 bzw. 18 weist unterschiedliche Aushebepunkte an seiner Bodengruppe 17 bzw. 19 auf. Die vorderen Aushebepunkte 20 und 21 sowie die hinteren Aushebepunkte 22 und 23 gehören zur Bodengruppe 17 des Personenwagens 3 und sind deshalb mit durchgezogenen Kreisen dargestellt, während die vorderen Aushebepunkte 24 und 25 sowie die hinteren Aushebepunkte 26 und 27 zur Bodengruppe 19 des Personenwagens 18 gehören und deshalb mit gestrichelten Kreisen dargestellt sind. Die Aushebepunkte 20 bzw. 24 und 22 bzw. 26 sind zu den Aushebepunkten 21 bzw. 25 und 23 bzw. 27 symmetrisch bezüglich der Längsachse L des Personenwagens 3 bzw. 18 angeordnet.

Da auf den Ladungsträgern 2 sowohl Personenwagen 3 als auch Personenwagen 18 transportiert werden können, ist die Abnahmestation 1 so ausgestaltet, dass die Stempel 11, 12 sowie 13, 14 auf nahezu jeden beliebigen Aufnahmepunkt eingestellt werden können. Kommt nach einem Ladungsträger 2 mit einem Personenwagen 3 anschließend ein Ladungsträger 2 mit einem Personenwagen 18 werden die vorderen Stempel 11 und 12 in Richtung der Längsachse L, also in X-Richtung um eine Strecke s₁ nach vorn verschoben. Die Position der Aushebepunkte 22 bzw. 23 ändert sich um eine schräge Strecke s₂ gegenüber der Position der Aushebepunkte 26 bzw. 27. Für die Änderung der Position der hinteren Stempel 13 und 14 werden diese demnach schräg nach innen um eine Betrag x₂ in Richtung der Längsachse L nach vorn und um einen Betrag y₂ quer zur Längsachse L verschoben.

Erst nachdem alle Stempel ihre der jeweiligen Bodengruppe entsprechende Position eingenommen haben, erfolgt der vertikale Hub zum Ausheben aus dem Ladungsträger 2. Jeder der Stempel 11, 12, 13 und 14 kann für seine Bewegung in Fahrzeuglängsrichtung, Fahrzeugquerrichtung sowie Fahrzeughochrichtung einen separaten Antrieb aufweisen. Sofern möglich, können einzelne Antriebe auch zusammengefasst werden.

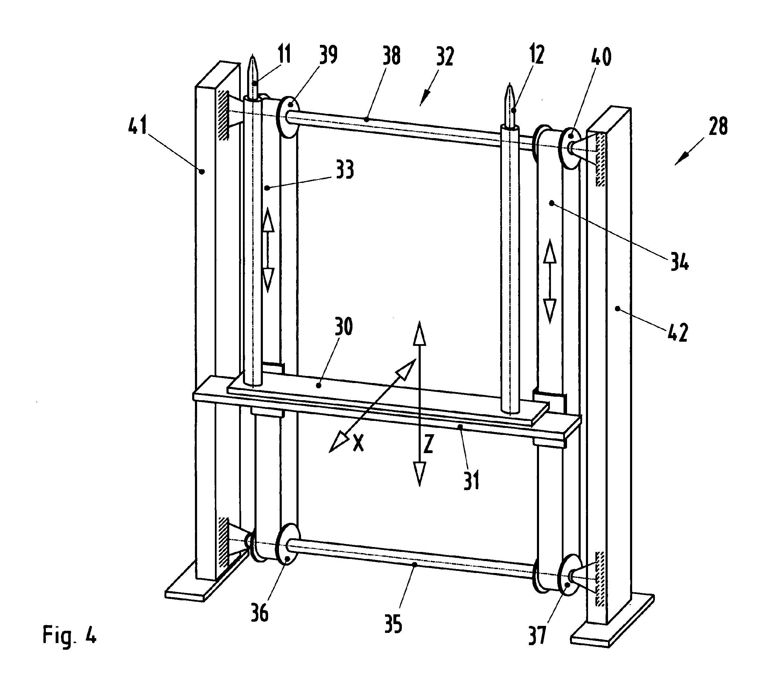

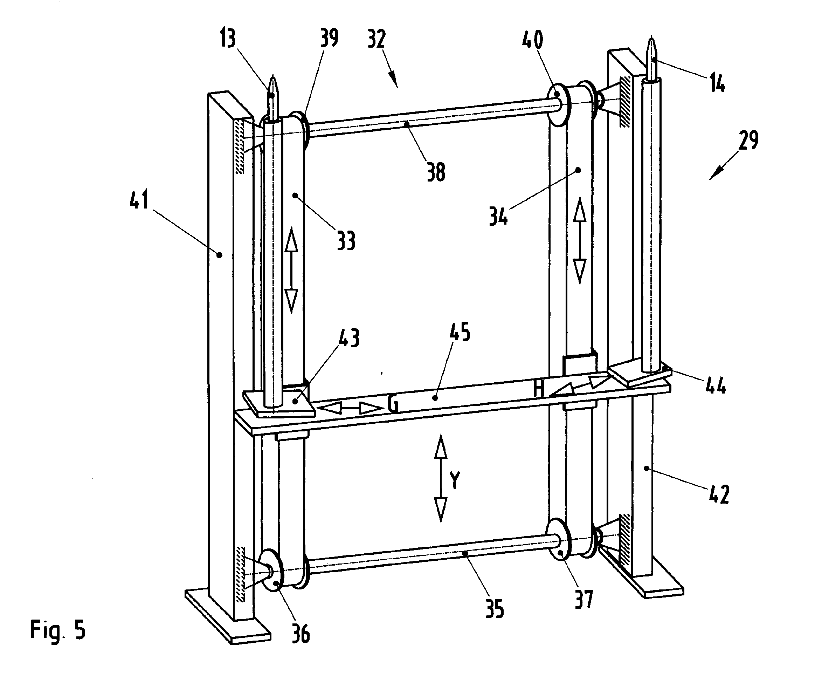

Eine bevorzugte Ausführung für den Antrieb der Stempel 11, 12, 13 und 14 geht aus den Figuren 4 und 5 hervor, wobei Figur 4 eine vordere Einheit 28 und Figur 5 eine hintere Einheit 29 einer Abnahmestation 1 zeigt.

Die vordere Einheit 28 umfasst die vorderen Stempel 11 und 12, die auf einer gemeinsamen Tragplatte 30 verschiebbar in Pfeilrichtung X auf einem Träger 31 gehalten sind. Der Antrieb für die Verschiebung kann ein gemeinsamer Elektromotor sein, wobei die Tragplatte 30 beispielsweise über eine Geradführung auf dem Träger 31 gelagert ist. Der Verschiebeweg entspricht dem Betrag x₁ gemäß Figur 3.

Für das Ausheben des Personenwagens 3 bzw. 4 aus dem Ladungsträger 2 ist der Träger 31 mit einem Zahnriemenhubwerk 32 gekoppelt, dessen Zahnriemen 33 und 34 den Träger 31 bei ihrer Auf- und Abbewegung in Pfeilrichtung Z mitnehmen, so dass die Stempel 11 und 12 einen Hub zwischen einer maximal ausgefahrenen und einer minimal eingefahrenen Position ausführen können. Der Antrieb der Zahnriemen 33 und 34 kann gemeinsam an einer gemeinsamen Antriebswelle 35 erfolgen, die die beiden unteren Umlaufrollen 36 und 37 miteinander verbindet. Alternativ ist ein gemeinsamer Antrieb an der oberen Welle 38 möglich, die die oberen Umlaufrollen 39 und 40 miteinander verbindet. Die Umlaufrollen 36, 37, 39, 40 sind an einer Tragsäulen 41, 42 befestigt, die einer nicht weiter dargestellten Tragstruktur der Abnahmestation zugeordnet sind.

Die hintere Einheit 29 gemäß Figur 5 umfasst für die Bewegung der Stempel 13 und 14 in Z-Richtung ebenfalls ein Zahnriemenhubwerk 32, was im wesentlichen dem Zahnriemenhubwerk der vorderen Einheit 28 entspricht, weshalb dessen Bestandteile mit gleichen Bezugsziffern gekennzeichnet ist. Die Tragsäulen sind wie in Figur 4 mit den Bezugsziffern 41 und 42 versehen.

Im Unterschied zur vorderen Einheit sind die Stempel 13 und 14 nicht auf einer gemeinsamen sondern auf einzelnen Tragplatten 43 und 44 gehalten. Jede dieser Tragplatten 43 und 44 ist wiederum auf einem gemeinsamen Träger 45 verschiebbar gelagert. Die Tragplatte 43 ist über eine nicht dargestellte Geradführung gemäß Pfeilrichtung G und die Tragplatte 44 ist über eine ebenfalls nicht dargestellte Geradführung gemäß Pfeilrichtung H verschiebbar. Beide Tragplatten 43 und 44 können über separate Antriebe angetrieben werden.

Die Bewegung der Tragplatte 43 bzw. 44 entspricht der Strecke s₂ gemäß Figur 3. D.h., die Bewegung gemäß Pfeilrichtung G bzw. H der Tragplatten 43 bzw. 44 setzt sich in diesem Ausführungsbeispiel aus einer X- und einer Y-Komponente zusammen.

Der Zyklus eines Ablaufs bei einer Abnahmestation 1 gestaltet sich wie folgt:

Ein Lesegerät vor der Abnahmestation 1 identifiziert den Ladungsträger 2 und stellt fest, ob es sich um einen Personenwagen 3 der ersten Modellreihe oder um einen Personenwagen 18 einer zweiten Modellreihe handelt. Alternativ kann eine Lichtschranke in der Abnahmestation 1 anhand von divergierenden Höhen der beiden Personenwagen 3 und 18 diese voneinander unterscheiden. Diese Information wird an die Stellantriebe der vorderen und hinteren Einheit 28 und 29 gegeben, so dass die Stempel 11, 12 gemäß Pfeilrichtung X und die Stempel 13, 14 gemäß Pfeilrichtung G und H in ihre den jeweiligen Aushebepunkten entsprechende Position verfahren werden, sofern keine Übereinstimmung der Modellreihe mit dem Vorgänger besteht. Der Hub der Stempel 11, 12, 13 und 14 erfolgt gleichzeitig durch die Aufwärtsbewegung der Zahnriemen 33 und 34. Die Stempel 11, 12, 13 und 14 gelangen in Kontakt mit den Aushebepunkten der Bodengruppe und heben im weiteren Verlauf der Aufwärtsbewegung den Personenwagen 3 bzw. 18 bis in seine maximal ausgefahrene Position an. In dieser Position greifen die Teleskopgreifarme 15 und 16 unter den Personenwagen 3 bzw. 18 und ziehen diesen auf den Heber 4 des Karossenspeichers 5.

Im Anschluss daran wird der freigewordene Ladungsträger 2 in Pfeilrichtung D zum Förderband 6 transportiert und gemäß Pfeilrichtung E einer erneuten Verwendung zugeführt.

Ab dann beginnt ein neuer Zyklus bei der Abnahmestation 1.

Wie bereits erwähnt besteht der Vorteil der beschriebenen Abnahmestation 1 darin, dass Personenwagen unterschiedlicher Modellreihen verarbeitet werden können. Sofern weitere Modelle verarbeitet werden sollen, sind deren Aushebepunkte entsprechend zu erfassen und die Verschiebung der Stempel in X- bzw. in Y-Richtung zu bestimmen. Eine größere Varianz kann erzielt werden, wenn die Bewegung der Stempel aus x- und y-Komponenten zusammengesetzt wird.

## Patentansprüche

1. Abnahmestation zur Entnahme eines Moduls, insbesondere eines Personenwagens (3, 18), aus einem Ladungsträger (2), mit vertikal bewegbaren Stempeln (11, 12, 13, 14), die das Modul vertikal aus dem Ladungsträger (2) nach oben bis in eine maximal ausfahrbare Position herausheben,
**dadurch gekennzeichnet,**
**dass** wenigstens einer der Stempel (11, 12, 13, 14) zusätzlich horizontal bewegbar ist.

2. Abnahmestation nach Anspruch 1,
**dadurch gekennzeichnet,**
**dass** die horizontale Bewegung des Stempels (11, 12, 13, 14) in Abhängigkeit von möglichen Aushebepunkten des Moduls festgelegt ist.

3. Abnahmestation nach Anspruch 2,
**dadurch gekennzeichnet,**
**dass** sich die horizontale Bewegung des Stempels (11, 12, 13, 14) aus einer Komponente in X- und/oder in Y-Richtung zusammensetzt.

4. Abnahmestation nach einem oder mehreren der vorgenannten Ansprüche,
**dadurch gekennzeichnet,**
**dass** die vertikale Hubbewegung (Z) von wenigstens zwei Stempeln (11, 12, 13, 14) in einer Einheit (28, 29) durch ein gemeinsames Zahnriemenhubwerk (32) erfolgt.

5. Verfahren für eine Abnahmestation zum Entnehmen eines Moduls, insbesondere eines Personenwagens (3, 18), aus einem Ladungsträger (2), mit vertikal bewegbaren Stempeln (11, 12, 13, 14), die das Modul vertikal aus dem Ladungsträger (2) nach oben bis in eine maximal ausfahrbare Position herausheben,
**dadurch gekennzeichnet,**
**dass** wenigstens einer der Stempel (11, 12, 13, 14) zusätzlich in horizontaler Richtung bewegt wird.

6. Verfahren nach Anspruch 5,
**dadurch gekennzeichnet,**
**dass** ein Lesegerät vor der Abnahmestation das Modul, insbesondere den Personenwagen (3, 18), identifiziert und diese Information die horizontale Bewegung der Stempel (11, 12, 13, 14) bewirkt.

7. Verfahren nach Anspruch 5,
**dadurch gekennzeichnet,**
**dass** eine Lichtschranke in der Abnahmestation das Modul, insbesondere den Personenwagen (3, 18), identifiziert und diese Information die horizontale Bewegung der Stempel (11, 12, 13, 14) bewirkt.

8. Verfahren nach Anspruch 6 oder 7,
**dadurch gekennzeichnet,**
**dass** nach dem vertikalen Anheben des Moduls, insbesondere des Personenwagens (3, 18), Teleskopgreifarme (15, 16) unter das Modul gefahren werden.

9. Verfahren nach Anspruch 8,
**dadurch gekennzeichnet,**
**dass** die Teleskopgreifarme (15, 16) das Modul von der Abnahmestation (1) wegtransportieren.
